(19) Europäisches Patentamt
European Patent Office
Office européen des brevets

(11) Publication number: **0 578 087 A2**

(12) **EUROPEAN PATENT APPLICATION**

(21) Application number: **93110264.4**

(51) Int. Cl.⁵: **G02B 1/04**, C08F 299/08

(22) Date of filing: **28.06.93**

(30) Priority: **29.06.92 JP 170995/92**
**28.05.93 JP 127553/93**

(43) Date of publication of application:
**12.01.94 Bulletin 94/02**

(84) Designated Contracting States:
**DE FR GB**

(71) Applicant: **Menicon Co., Ltd.**
**21-19, Aoi 3-chome**
**Naka-ku**
**Nagoya-shi Aichi-ken(JP)**

(72) Inventor: **Noro, Yukie, c/o Menicon Co., Ltd.**
**Kenkyusho**
**12-7, Biwajima 3-chome,**
**Nishi-ku Nagoya-shi**
**Aichi-ken(JP)**
Inventor: **Matsumoto, Masahiro, c/o Menicon Co., Ltd**
**Kenkyusho,**
**12-7, Biwajima 3-cho,**
**Nishi-ku**
**Nagoya-shi, Aichi-ken(JP)**
Inventor: **Ando, Ichiro, c/o Menicon Co., Ltd.**
**Kenkyusho**
**12-7, Biwajima 3-chome,**
**Nishi-ku Nagoya-shi**
**Aichi-ken(JP)**
Inventor: **Yokoyama, Yasuhiro, c/o Menicon Co.,Ltd. Kenkyusho**
**12-7, Biwajima 3-chome,**
**Nishi-ku Nagoya-shi**
**Aichi-ken(JP)**
Inventor: **Ichinohe, Shoji**
**2-32, Isobe 4-chome,**
**Annaka-shi**
**Gunma-ken(JP)**
Inventor: **Yamazaki, Toshio**
**791-4, Yamase,**
**Annaka-shi**
**Gunma-ken(JP)**

(74) Representative: **Wächtershäuser, Günter, Dr.**
**Tal 29**
**D-80331 München (DE)**

(54) **Ocular lens material.**

(57) An ocular lens material made of a copolymer of a polysiloxane macromonomer of the formula (I):

$$I^2-S^2-U^2-A^2$$
$$A^1-U^1-S^1-I^1-T^1 \quad / \quad \backslash \qquad (I)$$
$$I^3-S^3-U^3-A^3$$

wherein $A^1$ is $Y^{11}$-$R^{12}$- wherein $Y^{11}$ is an acryloyloxy group, etc., and $R^{12}$ is a $C_{2-6}$ linear or branched alkylene group; each of $A^2$ and $A^3$ is -$R^{22}$-$Y^{21}$ wherein $Y^{21}$ is an acryloyloxy group, etc., and $R^{22}$ is a $C_{2-6}$ linear or branched alkylene group; $U^1$ is -$X^{31}$-$E^{32}$-$X^{33}$-$R^{34}$- wherein $X^{31}$ is a covalent bond, etc., $E^{32}$ is a -NHCO- group, etc., $X^{33}$ is an oxygen atom; etc., and $R^{34}$ is a $C_{1-6}$ linear or branched alkylene group; each of $U^2$ and $U^3$ is $R^{41}$-$X^{42}$-$E^{43}$-$X^{44}$ wherein $X^{44}$ is a covalent bond, etc., $E^{43}$ is a -CONH-group, etc., $X^{42}$ is an oxygen atom, etc., and $R^{41}$ is a $C_{1-6}$ linear or branched alkylene group; each of $S^1$, $S^2$ and $S^3$ is:

EP 0 578 087 A2

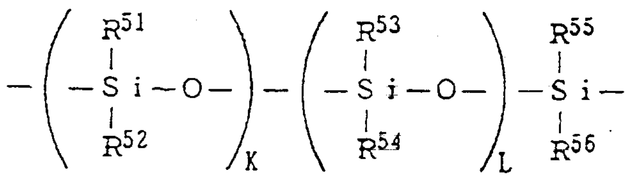

(VI)

wherein each of $R^{51}$, $R^{52}$, $R^{53}$, $R^{54}$, $R^{55}$ and $R^{56}$ is a $C_{1-3}$ alkyl group, etc., K is 1 to 1,500, and L is 0 to (1,500 - K); $I^1$ is $-R^{61}-X^{62}-$ wherein $X^{62}$ is a covalent bond, etc., and $R^{61}$ is a $C_{1-6}$ linear or branched alkylene group; each of $I^2$ and $I^3$ is $-X^{71}-R^{72}-$ wherein $X^{71}$ is a covalent bond, etc., and $R^{72}$ is a $C_{1-6}$ linear or branched alkylene group; and $T^1$ is:

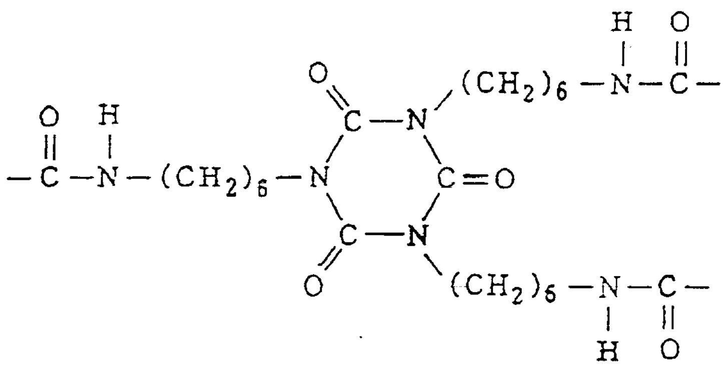

(IX)

with a monomer having an unsaturated double bond copolymerizable with the polysiloxane macromonomer.

The present invention relates to an ocular lens material. More particularly, it relates to an ocular lens material which is excellent in the impact resistance and has high oxygen permeability and which is useful for e.g. contact lenses and intraocular lenses.

Heretofore, polymethyl methacrylate has been used as a hard contact lens material, since it has excellent optical properties. However, the polymethyl methacrylate has no substantial oxygen permeability as the material itself, and it has been thereby difficult to supply oxygen required for the metabolism of cornea.

In recent years, the research on high oxygen permeable materials has advanced, and materials made of copolymers of e.g. siloxanyl methacrylate or fluoroalkyl methacrylate, have been developed. These materials are widely used at present.

However, when such materials made from silicone type monomers or fluorine type monomers are used for contact lenses, the mechanical strength tends to decrease with an increase of the amount of such materials incorporated, whereby contact lenses are likely to be damaged when washed by the users. Thus, it has been difficult to simultaneously satisfy the requirement for high oxygen permeability and excellent mechanical strength.

Further, as contact lenses, not only hard contact lenses but also soft contact lenses are known. The soft contact lenses have merits much that they are flexible and readily compatible with cornea, and they give comfortable feeling to wearers. Generally, most of soft contact lenses are of the type which absorb water and thereby soften. However, the oxygen permeability of such water-absorptive soft contact lenses is not so high, and they may sometimes hinder the metabolism of cornea. Therefore, in recent years, there have been some attempts to improve the oxygen permeability by increasing the water content. However, there are problems such that the mechanical strength deteriorates and bacteria or fungi are likely to propagate in the material, as the water absorptivity increases.

To solve such problems of the water-absorptive contact lenses, soft contact lenses made of a substantially non-water absorptive soft material have been proposed. However, the mechanical strength is still inadequate with such non-water absorptive soft contact lenses.

Nowadays, silicone macromonomers containing urethane bonds have been developed as materials capable of imparting both oxygen permeability and mechanical strength to hard and soft contact lenses. For example, a material made of a copolymer of a mixture comprising a silicone macromonomer having ethylenically polymerizable groups introduced via urethane bonds at both terminals or at terminals of branched chains of an organosiloxane, and a water-insoluble monomer and/or water-soluble monomer (Japanese Unexamined Patent Publications No. 102914/1984 and No. 297411/1988) and a silicone macromonomer having polymerizable groups introduced via urethane bonds in the same manner as above (Japanese Unexamined Patent Publication No. 229524/1984) are known. Generally, urethane bonds provide higher hardness by e.g. hydrogen bonds in the material containing them.

However, conventional silicone macromonomers containing urethane bonds have a drawback that the urethane concentration per molecule is low since urethane bonds are present only at the terminals and no urethane bonds are present in the bin portion of the silicone chain, and they are not capable of imparting sufficient mechanical strength to the material. If it is attempted to increase the amount of urethane bonds to improve the mechanical strength, the viscosity of such a macromonomer will increase, whereby it will be difficult to dissolve such a silicone macromonomer in other copolymer component, and there will be a problem that the material will be turbid.

Under these circumstances, the present inventors have conducted extensive researches to obtain an ocular lens material which is not only excellent in the transparency but also in both the oxygen permeability and mechanical strength, in view of the above described prior art. As a result, they have found that a copolymer of a silicone macromonomer having three polymerizable groups and containing urethane bonds, with a monomer having an unsaturated double bond copolymerizable therewith, satisfies all of the above-mentioned physical properties simultaneously, and such a macromonomer has a relatively low viscosity. The present invention has been accomplished on the bases of this discovery.

Thus, the present invention provides an ocular lens material made of a copolymer of a polysiloxane macromonomer of the formula (I):

$$A^1\text{-}U^1\text{-}S^1\text{-}I^1\text{-}T^1 \begin{array}{l} / \; I^2\text{-}S^2\text{-}U^2\text{-}A^2 \\ \\ \backslash \; I^3\text{-}S^3\text{-}U^3\text{-}A^3 \end{array} \qquad (I)$$

wherein $A^1$ is a group of the formula (II):

$Y^{11}\text{-}R^{12}\text{-}$ (II)

wherein $Y^{11}$ is an acryloyloxy group, a methacryloyloxy group, a vinyl group or an allyl group, and $R^{12}$ is a $C_{2-6}$ linear or branched alkylene group;

each of $A^2$ and $A^3$ independently represents a group of the formula (III):

$\text{-}R^{22}\text{-}Y^{21}$ (III)

wherein $Y^{21}$ is an acryloyloxy group, a methacryloyloxy group, a vinyl group or an allyl group, and $R^{22}$ is a $C_{2-6}$ linear or branched alkylene group;

$U^1$ is a group of the formula (IV):

$\text{-}X^{31}\text{-}E^{32}\text{-}X^{33}\text{-}R^{34}\text{-}$ (IV)

wherein $X^{31}$ is a covalent bond, an oxygen atom or a $C_{2-20}$ alkylene glycol group; $E^{32}$ is a -NHCO- group (provided that in this case, $X^{31}$ is a covalent bond, and $E^{32}$ forms a urethane bond together with $X^{33}$) or a bivalent group derived from a diisocyanate selected from the group consisting of saturated aliphatic, alicyclic or aromatic diisocyanates (provided that in this case, $X^{31}$ is an oxygen atom or a $C_{2-20}$ alkylene glycol group, and $E^{32}$ forms a urethane bond together with $X^{31}$ and $X^{33}$); $X^{33}$ is an oxygen atom or a $C_{2-20}$ alkylene glycol group; and $R^{34}$ is a $C_{1-6}$ linear or branched alkylene group;

each of $U^2$ and $U^3$ independently represents a group of the formula (V):

$\text{-}R^{41}\text{-}X^{42}\text{-}E^{43}\text{-}X^{44}$ (V)

wherein $X^{44}$ is a covalent bond, an oxygen atom or a $C_{2-20}$ alkylene glycol group; $E^{43}$ is a -CONH- group (provided that in this case, $X^{44}$ is a covalent bond, and $E^{43}$ forms a urethane bond together with $X^{42}$) or a bivalent group derived from a diisocyanate selected from the group consisting of saturated aliphatic, alicyclic and aromatic diisocyanates (provided that in this case, $X^{44}$ is an oxygen atom or a $C_{2-20}$ alkylene glycol group, and $E^{43}$ forms a urethane bond together with $X^{44}$ and $X^{42}$); $X^{42}$ is an oxygen atom or a $C_{2-20}$ alkylene glycol group; and $R^{41}$ is a $C_{1-6}$ linear or branched alkylene group;

each of $S^1$, $S^2$ and $S^3$ independently represents a group of the formula (VI):

$$-\left(-\underset{R^{52}}{\overset{R^{51}}{\underset{|}{\overset{|}{Si}}}}-O-\right)_K-\left(-\underset{R^{54}}{\overset{R^{53}}{\underset{|}{\overset{|}{Si}}}}-O-\right)_L-\underset{R^{56}}{\overset{R^{55}}{\underset{|}{\overset{|}{Si}}}}- \qquad (VI)$$

wherein each of $R^{51}$, $R^{52}$, $R^{53}$, $R^{54}$, $R^{55}$ and $R^{56}$ independently represents a $C_{1-3}$ alkyl group or a phenyl group, K is an integer of from 1 to 1,500, and L is an integer of from 0 to (1,500 - K);

$I^1$ is a group of the formula (VII):

$\text{-}R^{61}\text{-}X^{62}\text{-}$ (VII)

wherein $X^{62}$ is a covalent bond, an oxygen atom or a $C_{2-20}$ alkylene glycol group, and $R^{61}$ is a $C_{1-6}$ linear or branched alkylene group;

each of $I^2$ and $I^3$ independently represents a group of the formula (VIII):

$-X^{71}-R^{72}-$ (VIII)

wherein $X^{71}$ is a covalent bond, an oxygen atom or a $C_{2-20}$ alkylene glycol group, and $R^{72}$ is a $C_{1-6}$ linear or branched alkylene group; and

$T^1$ is a group of the formula (IX):

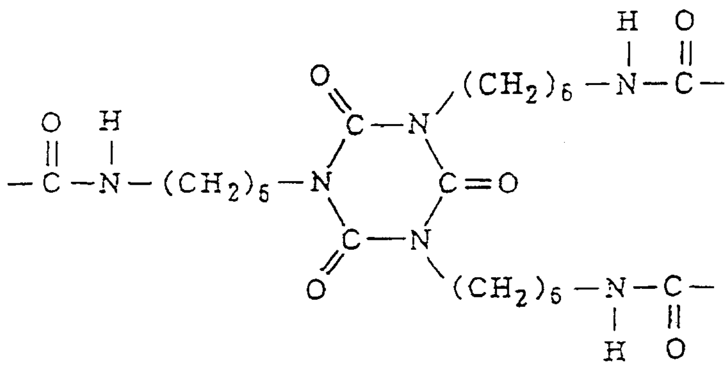

(IX)

with a monomer having an unsaturated double bond copolymerizable with the polysiloxane macromonomer.

The above polysiloxane macromonomer has elastic bonds called urethane bonds and is a component which imparts a nature to improve the mechanical strength by reinforcing the material by the siloxane moieties of this monomer without impairing the flexibility and oxygen permeability of the material and by imparting elastic resiliency to eliminate brittleness. Further, the above polysiloxane macromonomer imparts high oxygen permeability, since it has silicone chains in its molecular chain.

The above polysiloxane macromonomer has polymerizable groups at each terminal of the molecule and is capable of being copolymerized with other copolymer component by such polymerizable groups. Thus, it has an excellent characteristic such that it imparts a reinforcing effect by chemical bonds in addition to the physical reinforcing effect by entanglement of molecules, to the resulting ocular lens.

Now, the present invention will be described in further detail with reference to the preferred embodiments.

The above polysiloxane macromonomer is a compound of the formula (I).

In the formula (I), $A^1$ is, as mentioned above, a group of the formula (II):

$Y^{11}-R^{12}-$ (II)

wherein $Y^{11}$ and $R^{12}$ are as defined above, and each of $A^2$ and $A^3$ independently represents a group of the formula (III):

$-R^{22}-Y^{21}$ (III)

wherein $Y^{21}$ and $R^{22}$ are as defined above.

Each of $Y^{11}$ and $Y^{21}$ is a polymerizable group and is preferably an acryloyloxy group, a methacryloyloxy group or a vinyl group in that it is readily copolymerizable with a monomer having a copolymerizable unsaturated double bond.

Each of $R^{12}$ and $R^{22}$ is a $C_{2-6}$ linear or branched alkylene group, preferably an ethylene group, a propylene group or a butylene group.

Each of $U^1$, $U^2$ and $U^3$ is a group containing a urethane bond in the molecular chain of the above polysiloxane macromonomer.

In $U^1$, $U^2$ and $U^3$, each of $E^{32}$ and $E^{43}$ is, as mentioned above, a -NHCO- group, or a bivalent group derived from a diisocyanate group selected from the group consisting of saturated aliphatic, alicyclic and aromatic diisocyanate. Here, the bivalent group derived from a diisocyanate selected from the group consisting of saturated aliphatic, alicyclic and aromatic diisocyanates may, for example, be a saturated aliphatic diisocyanate such as ethylene diisocyanate, 1,3-diisocyanatepropane or hexamethylene diisocyanate, an alicyclic diisocyanate such as 1,2-diisocyanate cyclohexane, bis(4-isocyanatecyclohexyl)-methane or isophorone diisocyanate; an aromatic diisocyanate such as tolylene diisocyanate or 1,5-diisocyanate naphthalene; or an unsaturated aliphatic diisocyanate such as 2,2'-diisocyanate diethylfumarate. Among them, hexamethylene diisocyanate, tolylene diisocyanate and isophorone diisocyanate are preferred, since they are relatively readily available, and they are capable of imparting mechanical strength.

In $U^1$, when $E^{32}$ is a -NHCO- group, $X^{31}$ is a covalent bond, and $E^{32}$ forms a urethane bond of the formula -NH-COO- together with $X^{33}$. Further, when $E^{32}$ is the above-mentioned bivalent group derived from a diisocyanate, $X^{31}$ is an oxygen atom or a $C_{2-20}$ alkylene glycol group, and $E^{32}$ forms a urethane bond together with $X^{31}$ and $X^{33}$. $X^{33}$ is an oxygen atom or a $C_{2-20}$ alkylene glycol group, and $R^{34}$ is a $C_{1-6}$ linear or branched alkylene group.

In $U^2$ and $U^3$, $R^{41}$ is a $C_{1-6}$ linear or branched alkylene group. $X^{42}$ is an oxygen atom or a $C_{2-20}$ alkylene glycol group. When $E^{43}$ is a -NHCO- group, $X^{44}$ is a covalent bond, and $E^{43}$ forms a urethane bond together with $X^{42}$. When $E^{43}$ is the above-mentioned bivalent group derived from a diisocyanate, $X^{44}$ is an oxygen atom or a $C_{2-20}$ alkylene glycol group, and $E^{43}$ forms a urethane bond together with $X^{44}$ and $X^{42}$.

Here, the $C_{2-20}$ alkylene glycol for the above $X^{31}$, $X^{33}$, $X^{42}$ and $X^{44}$ may, for example, be a group of the formula (X):

$$-O-(C_x-H_{2x}-O)_y- \qquad (X)$$

wherein x is an integer of from 2 to 4, and y is an integer of from 1 to 5. In such a formula (X), if y is an integer of 6 or more, the oxygen permeability tends to be low, and the mechanical strength tends to deteriorate. Therefore, in the present invention, it is preferred that y is an integer of from 1 to 5, particularly preferably an integer of from 1 to 3.

Each of $S^1$, $S^2$ and $S^3$ independently represents a group of the formula (VI). In the formula (VI), K is an integer of from 1 to 1,500, and L is an integer of from 0 to (1,500 - K). When K + L is larger than 1,500, the molecular weight of the polysiloxane macromonomer tends to be too large, and the compatibility thereof with a monomer having an unsaturated double bond copolymerizable therewith tends to be poor, whereby there will be a tendency that it does not adequately dissolve when mixed, and white turbidity will result during the polymerization, and it tends to be difficult to obtain a uniform transparent ocular lens material. Further, when it is 0, not only the oxygen permeability of the resulting ocular lens material tends to be low, but also the flexibility tends to be poor. K + L is preferably an integer of from 2 to 200, more preferably from 3 to 80, most preferably from 5 to 80. Further, K is preferably an integer of from 1 to 100, more preferably from 1 to 40, most preferably from 2 to 40. L is preferably an integer of from 0 to 100, more preferably from 0 to 40.

$I^1$ is a group of the formula (VII):

$$-R^{61}-X^{62}- \qquad (VII)$$

wherein $X^{62}$ and $R^{61}$ are as defined above. Each of $I^2$ and $I^3$ independently represents a group of the formula (VIII):

$$-X^{71}-R^{72}- \qquad (VIII)$$

wherein $X^{71}$ and $R^{72}$ are as defined above.

Here, the $C_{2-20}$ alkylene glycol for the above $X^{62}$ and $X^{71}$ may, for example, be a group of the formula (X):

$$-O-(C_x-H_{2x}-O)_y- \qquad (X)$$

wherein x and y are as defined above. In such a formula (X), if y is an integer of 6 or more, the oxygen permeability tends to be low, and the mechanical strength tends to deteriorate. Therefore, in the present invention, it is, preferred that y is an integer of from 1 to 5, particularly preferably an integer of from 1 to 3.

$T^1$ is a group of the formula (IX).

The amount of the above polysiloxane macromonomer to be incorporated, is usually from 3 to 80 parts (parts by weight, the same applies hereinafter), preferably from 5 to 60 parts, most preferably from 7 to 40 parts, per 100 parts of the total amount of the monomers subjected to polymerization. If the amount of the polysiloxane macromonomer to be incorporated is less than the above range, there will be a tendency such that the oxygen permeability and mechanical strength of the ocular lens material tends to be inadequate. Further, if it exceeds the above range, it tends to be difficult to dissolve other copolymer component,

whereby the resulting material tends to be turbid.

The monomer having an unsaturated double bond copolymerizable with the above polysiloxane macromonomer (hereinafter referred to as other copolymer component) is a component which imparts to the resulting ocular lens material additional oxygen permeability, hardness or softness, hydrophilicity, lipid stain resistance, further improved strength and durability upon cross linking, an ultraviolet ray absorbing ability and a color.

For example, in order to impart hardness or softness by adjusting the degree of hardness, one or more members may be selected for use among linear, branched or cyclic alkyl (meth)acrylates, alkoxyalkyl (meth)acrylates and alkylthioalkyl (meth)acrylates, such as methyl (meth)acrylate, ethyl (meth)acrylate, isopropyl (meth)acrylate, n-propyl (meth)acrylate, isobutyl (meth)acrylate, n-butyl (meth)acrylate, 2-ethylhexyl (meth)acrylate, n-octyl (meth)acrylate, n-decyl (meth)acrylate, n-dodecyl (meth)acrylate, t-butyl (meth)acrylate, pentyl (meth)acrylate, t-pentyl (meth)acrylate, hexyl (meth)acrylate, heptyl (meth)acrylate, nonyl (meth)acrylate, stearyl (meth)acrylate, cyclopentyl (meth)acrylate, cyclohexyl (meth)acrylate, 2-ethoxyethyl (meth)acrylate, 3-ethoxypropyl (meth)acrylate, 2-methoxyethyl (meth)acrylate, 3-methoxypropyl (meth)acrylate, ethylthioethyl (meth)acrylate and methylthioethyl (meth)acrylate; styrene; $\alpha$-methylstyrene; alkylstyrenes such as methylstyrene, ethylstyrene, propylstyrene, butylstyrene, t-butylstyrene, isobutylstyrene and pentylstyrene; and alkyl-$\alpha$-methylstyrenes such as methyl-$\alpha$-methylstyrene, propyl-$\alpha$-methylstyrene, butyl-$\alpha$-methylstyrene, t-butyl-$\alpha$-methylstyrene, isobutyl-$\alpha$-methylstyrene and pentyl-$\alpha$-methylstyrene. In this specification, the term "(meth)acrylate" means "acrylate and/or methacrylate", and the same applies to other (meth)acrylate derivatives. When it is desired to obtain e.g. a soft contact lens, such other copolymer component is preferably the one which, when made into a homopolymer, will have a glass transition point (hereinafter referred to as Tg) of not higher than 40 °C. Further, when it is desired to obtain e.g. a hard contact lens, it is preferred to employ the one which, when made into a homopolymer, will have a Tg of higher than 40 °C. The amount of such a copolymer component to impart hardness or softness by adjusting the degree of hardness is usually from 3 to 60 parts by weight, preferably from 5 to 50 parts by weight, more preferably from 5 to 40 parts by weight per 100 parts by weight of the total amount of monomers to be subjected to polymerization. If such an amount is less the the above lower limit, the resulting ocular lens material tends to be brittle. On the other hand, if it exceeds the above upper limit, the amount of the above polysiloxane macromonomer decreases correspondingly, whereby the oxygen permeability or the mechanical strength tends to be low.

In order to impart additional oxygen permeability to the resulting ocular lens material, organopolysiloxane-containing alkyl (meth)acrylates such as pentamethyldisiloxanylmethyl (meth)acrylate, trimethylsiloxydimethylsilylpropyl (meth)acrylate, methylbis(trimethylsiloxy)silylpropyl (meth)acrylate, tris-(trimethylsiloxy)silylpropyl (meth)acrylate, mono[methylbis(trimethylsiloxy)siloxy]bis(trimethylsiloxy)-silylpropyl (meth)acrylate, tris[methylbis(trimethylsiloxy)siloxy]silylpropyl(meth)acrylate, methyl[bis-(trimethylsiloxy)]silylpropylglyceryl (meth)acrylate, tris(trimethylsiloxy)silylpropylglyceryl (meth)acrylate, mono[methylbis(trimethylsiloxy)siloxy]bis(trimethylsiloxy)silylpropylglyceryl (meth)acrylate, trimethylsilylethyltetramethyldisiloxanylpropylglyceryl (meth)acrylate, trimethylsilylmethyl (meth)acrylate, trimethylsilylpropyl (meth)acrylate, trimethylsilylpropylglyceryl (meth)acrylate, pentamethyldisiloxanylpropylglyceryl (meth)acrylate, methylbis(trimethylsiloxy)methyl (meth)acrylate, tetramethyltriisopropylcyclotetrasiloxynylpropyl (meth)acrylate, tetramethyltriisopropylcyclotetrasiloxybis-(trimethylsiloxy)silylpropyl (meth)acrylate and trimethylsiloxydimethylsilylpropyl (meth)acrylate; alkylvinylsilanes such as trimethylvinylsilane; and organopolysiloxane-containing styrene derivatives of the formula (XI):

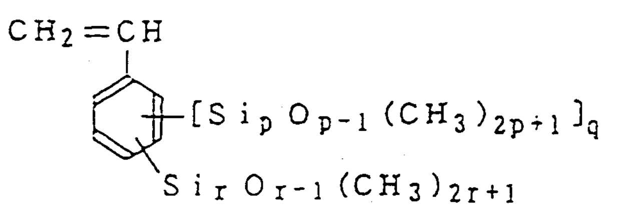

(XI)

wherein p is an integer of from 1 to 15, q is 0 or 1, and r is an integer of from 1 to 15. With respect to the organopolysiloxane-containing styrene derivatives of the formula (XI), if p or r is an integer of 16 or more, their synthesis or purification tends to be difficult, and the hardness of the resulting ocular lens material tends to be low. On the other hand, if q is an integer of 2 or more, synthesis of such organopolysiloxane-containing styrene derivatives tends to be difficult. Typical examples of the compounds of the formula (XI) include tris(trimethylsiloxy)silylstyrene, bis(trimethylsiloxy)methylsilylstyrene, dimethylsilylstyrene, trimethylsilylstyrene, tris(trimethylsiloxy)siloxanyldimethylsilylstyrene, [bis(tirmethylsiloxy)methylsiloxanyl]-dimethylsilylstyrene, pentamethyldisiloxanylstyrene, heptamethyltrisiloxanylstyrene, nonamethyltetrasiloxanylstyrene, pentadecamethylheptasiloxanylstyrene, heneicosamethyldecasiloxanylstyrene, heptacosamethyltridecasiloxanylstyrene, hentriacontamethylpentadecasiloxanylstyrene, trimethylsiloxypentamethyldisiloxymethylsilylstyrene, tris(pentamethyldisiloxy)silylstyrene, (tristrimethylsiloxy)siloxanylbis-(trimethylsiloxy)silylstyrene, bis(heptamethyltrisiloxy)methylsilylstyrene, tris(methylbistrimethylsiloxysiloxy)-silylstyrene, trimethylsiloxybis(tristrimethylsiloxysiloxy)silylstyrene, heptakis(trimethylsiloxy)-trisiloxanylstyrene, tris(tristrimethylsiloxysiloxy)silylstyrene, (tristrimethylsiloxyhexamethyl)tetrasiloxy-(tristrimethylsiloxy)siloxytrimethylsiloxysilylstyrene, nonakis(trimethylsiloxy)tetrasiloxanylstyrene, bis-(tridecamethylhexasiloxy)methylsilylstyrene, heptamethylcyclotetrasiloxanylstyrene, heptamethylcyclotetrasiloxybis (trimethylsiloxy) silylstyrene, and tripropyltetramethylcyclotetrasiloxanylstyrene. The amount of such a copolymer component to impart additional oxygen permeability is usually from 2 to 80 parts by weight, preferably from 5 to 70 parts by weight, more preferably from 10 to 65 parts by weight per 100 parts by weight of the total amount of monomers to be subjected to polymerization. If the amount is less than the above lower limit, no substantial effects for improving the oxygen permeability by the addition of such other copolymer component, will be expected. On the other hand, if the amount exceeds the above upper limit, the amount of the polysiloxane macromonomer will be correspondingly small, whereby the mechanical strength tends to be low.

Further, in order to impart a hydrophilic nature to the resulting ocular lens material, hydroxyalkyl (meth)-acrylates such as 2-hydroxyethyl (meth)acrylate, hydroxybutyl (meth)acrylate and hydroxypropyl (meth)-acrylate; (alkyl)aminoalkyl (meth)acrylates such as 2-dimethylaminoethyl (meth)acrylate and 2-butylaminoethyl (meth)acrylate; alkyl (meth)acrylamides such as N,N-dimethylacrylamide; polyglycol mono-(meth)acrylates such as propyleneglycol mono(meth)acrylate; vinylpyrrolidone; (meth)acrylic acid; maleic anhydride; fumaric acid; fumaric acid derivatives; aminostyrene and hydroxystyrene, may be used alone or in combination as a mixture of two or more. The amount of such a copolymer component to impart a hydrophilic nature, is usually from 0.5 to 70 parts by weight, preferably from 1 to 60 parts by weight, more preferably from 1.5 to 55 parts by weight, per 100 parts by weight of the total amount of monomers to be subjected to polymerization. If such an amount is less than the above lower limit, no adequate effects for improving a hydrophilic nature will be expected by the addition of such other copolymerizable component. On the other hand, if it exceeds the above limit, the amount of the polysiloxane macromonomer will correspondingly be small, whereby high oxygen permeability and high mechanical strength tend to be hardly expected.

Further, in order to impart lipid stain resistance to the resulting ocular lens material, a fluorine-containing monomer of the formula (XII):

$$CH_2 = CR^7COOC_sH_{(2s-t-u+1)}F_t(OH)_u \qquad (XII)$$

wherein $R^7$ is a hydrogen atom or $CH_3$, s is an integer of from 1 to 15, t is an integer of from 1 to (2s + 1), and u is an integer of from 0 to 2, may, for example, be employed. Specific examples of the monomer of the formula (XII) include 2,2,2-trifluoroethyl (meth)acrylate, 2,2,3,3-tetrafluoropropyl (meth)acrylate, 2,2,3,3-tetrafluoro-t-pentyl (meth)acrylate, 2,2,3,4,4,4-hexafluorobutyl (meth)acrylate, 2,2,3,4,4,4-hexafluoro-t-hexyl (meth)acrylate, 2,3,4,5,5,5-hexafluoro-2,4-bis(trifluoromethyl)pentyl (meth)acrylate, 2,2,3,3,4,4-hexafluorobutyl (meth)acrylate, 2,2,2,2',2',2'-hexafluoroisopropyl (meth)acrylate, 2,2,3,3,4,4,4-heptafluorobutyl (meth)acrylate, 2,2,3,3,4,4,5,5-octafluoorpentyl (meth)acrylate, 2,2,3,3,4,4,5,5,5-nonafluoropentyl (meth)acrylate, 2,2,3,3,4,4,5,5,6,6,7,7-dodecafluoropentyl (meth)acrylate, 3,3,4,4,5,5,6,6,7,7,8,8-dodecafluorooctyl (meth)-acrylate, 3,3,4,4,5,5,6,6,7,7,8,8,8-tridecafluorooctyl (meth)acrylate, 2,2,3,3,4,4,5,5,6,6,7,7,7-tridecafluoroheptyl (meth)acrylate, 3,3,4,4,5,5,6,6,7,7,8,8,9,9,10,10-hexadecafluorodecyl (meth)acrylate, 3,3,4,4,5,5,6,6,7,7,8,8,9,9,10,10,10-heptadecafluorodecyl (meth)acrylate, 3,3,4,4,5,5,6,6,7,7,8,8,9,9,10,10,11,11-octadecafluoroundecyl (meth)acrylate, 3,3,4,4,5,5,6,6,7,7,8,8,9,9,10,10,11,11,11-nonadecafluoroundecyl (meth)acrylate, 3,3,4,4,5,5,6,6,7,7,8,8,9,9,10,10,11,11,12,12-eicosafluorododecyl (meth)acrylate, 2-hydroxy-4,4,5,5,6,6,7,7,7-octafluoro-6-trifluoromethylheptyl (meth)acrylate, 2-hydroxy-4,4,5,5,6,6,7,7,8,8,9,9,9-dodecafluoro-8-trifluoromethylnocyl (meth)acrylate and 2-hydroxy-4,4,5,5,6,6,7,7,8,9,9,9,10,11,11,11-hexadecafluoro-10-trifluoromethylundecyl (meth)acrylate.

The amount of such a fluorine-containing monomer is usually from 5 to 80 parts by weight, preferably from 10 to 60 parts by weight, more preferably from 30 to 50 parts by weight, per 100 parts by weight of

the total amount of monomers to be subjected to polymerization. If such an amount is less than the above lower limit, no adequate lipid stain resistance tends to be imparted to the resulting ocular lens material. On the other hand, if it exceeds the above upper limit, the amount of the polysiloxane macromonomer will correspondingly be small, whereby high oxygen permeability and high mechanical strength tend to be hardly expected.

Further, in order to impart improved mechanical strength and durability to the resulting ocular lens material, other copolymerizable component may, for example, be a crosslinking agent such as etylene glycol di(meth)acrylate, diethylene glycol di(meth)acrylate, triethylene glycol di(meth)acrylate, propylene glycol di(meth)acrylate, dipropylene glycol di(meth)acrylate, allyl (meth)acrylate, vinyl (meth)acrylate, trimethyrolpropane tri(meth)acrylate, methacryloyloxy ethyl acrylate, divinylbenzene, diallyl phthalate, diallyl adipate, triallyl isocyanurate, α-methylene-N-vinylpyrrolidone, 4-vinylbenzyl (meth)acrylate, 3-vinylbenzyl (meth)acrylate, 2,2-bis(p-(meth)acryloyloxyphenyl)hexafluoropropane, 2,2-bis(m-(meth)acryloyloxyphenyl)-hexafluoropropane, 2,2-bis(o-(meth)acryloyloxyphenyl)hexafluoropropane, 2,2-bis(p-(meth)-acryloyloxyphenyl)propane, 2,2-bis(m-(meth)acryloyloxyphenyl)propane, 2,2-bis(o-(meth)acryloyloxyphenyl)-propane, 1,4-bis(2-(meth)acryloyloxyhexafluoroisopropyl)benzene, 1,4-bis(2-(meth)-acryloyloxyhexafluoroisopropyl)benzene, 1,2-bis(2-(meth)acryloyloxyhexafluoroisopropyl)benzene, 1,4-bis(2-(meth)acryloyloxyisopropyl)benzene, 1,3-bis(2-(meth)acryloyloxyisopropyl)benzene or 1,2-bis(2-(meth)-acryloyloxyisopropyl)benzene. These crosslinking agents may be used alone or in combination as a mixture of two or more. The amount of such a crosslinking agent is usually from 0.01 to 10 parts by weight, preferably from 0.05 to 8 parts by weight, more preferably from 0.1 to 5 parts by weight, per 100 parts by weight of the total amount of monomers to be subjected to the polymerization. If the amount of the crosslinking agent is less than the lower limit, no adequate effects tend to be obtained by the incorporation of such such a crosslinking agent. On the other hand, if it exceeds the above upper limit, the material tends to be brittle.

Further, in order to impart ultraviolet absorptivity or a color to the resulting ocular lens material, a polymerizable ultraviolet absorber, a polymerizable dyestuff or a polymerizable ultraviolet absorbing dyestuff may, for example, be used as other copolymer component.

Specific examples of the polymerizable ultraviolet absorber include, for example, benzophenone type polymerizable ultraviolet absorbers such as 2-hydroxy-4-(meth)acryloyloxybenzophenone, 2-hydroxy-4-(meth)acryloyloxy-5-tert-butylbenzophenone, 2-hydroxy-4-(meth)acryloyloxy-2',4'-dichlorobenzophenone and 2-hydroxy-4-(2'-hydroxy-3'-(meth)acryloyloxypropoxy)benzophenone; benzotriazole type polymerizable ultraviolet absorbers such as 2-(2'-hydroxy-5'-(meth)acryloyloxyethylphenyl)-2H-benzotriazole, 2-(2'-hydroxy-5'-(meth)acryloyloxyethylphenyl)-5-chloro-2H-benzotriazole, 2-(2'-hydroxy-5'-(meth)-acryloyloxypropylphenyl)-2H-benzotriazole and 2-(2'-hydroxy-5'-(meth)acryloyloxypropyl-3'-tert-butylphenyl)-5-chloro-2H-benzotriazole; salicylic acid derivative-type polymerizable ultraviolet absorbers such as phenyl 2-hydorxy-4-(meth)acryloyloxymethylbenzoate; and other polymerizable ultraviolet absorbers such as methyl 2-cyano-3-phenyl-3-(3'-(meth)acryloyloxyphenyl)propenoate. These polymerizable ultraviolet absorbers may be used alone or in combination as a mixture of two or more different kinds.

Specific examples of the polymerizable dyestuff include, for example, azo type polymerizable dyestuffs such as 1-phenylazo-4-(meth)acryloyloxynaphthalene, 1-phenylazo-2-hydroxy-3-(meth)-acryloyloxynaphthalene, 1-naphthylazo-2-hydroxy-3-(meth)acryloyloxynaphthalene, 1-(α-anthrylazo)-2-hydroxy-3-(meth)acryloyloxynaphthalene, 1-((4'-(phenylazo)phenyl)azo)-2-hydroxy-3-(meth)-acryloyloxynaphthalene, 1-(2',4'-xylylazo)-2-(meth)acryloyloxynaphthalene, 1-(o-tolylazo)-2-(meth)-acryloyloxynaphthalene, 2-(m-(meth)acryloylamideanilino)-4,6-bis(1'-(o-tolylazo)-2'-naphthylamino)-1,3,5-triazine, 2-(m-vinylanilino)-4-((4'-nitrophenylazo)-anilino)-6-chloro-1,3,5-triazine, 2-(1'-(o-tolylazo)-2'-naphthyloxy-4-(m-vinylanilino)-6-chloro-1,3,5-triazine, 2-(p-vinylanilino)-4-(1'-(o-tolylazo)-2'-naphthylamino)-6-chloro-1,3,5-triazine, N-(1'-(o-tolylazo)-2'-naphthyl)-3-vinylphthalic acid monoamide, N-(1'-(o-tolylazo)-2'-naphthyl)-6-vinylphthalic acid monoamide, 3-vinylphthalic acid-(4'-(p-sulfophenylazo)-1'-naphthyl)monoester, 6-vinylphthalic acid-(4'-(p-sulfophenylazo)-1'-naphthyl)monoester, 3-(meth)acryloylamide-4-phenylazophenol, 3-(meth)acryloylamide-4-(8'-hydroxy-3',6'-disulfo-1'-naphthylazo)phenol, 3-(meth)acryloylamide-4-(1'-phenylazo-2'-naphthylazo)phenol, 3-(meth)acryloylamide-4-(p-tolylazo)phenol, 2-amino-4-(m-(2'-hydroxy-1'-naphthylazo)anilino)-6-isopropenyl-1,3,5-triazine, 2-amino-4-(N-methyl-p-(2'-hydroxy-1'-naphthylazo)anilino)-6-isopropenyl-1,3,5-triazine, 2-amino-4-(m-(4'-hydroxy-1'-phenylazo)anilino)-6-isopropenyl-1,3,5-triazine, 2-amino-4-(N-methyl-p-(4'-hydroxyphenylazo)anilino)-6-isopropenyl-1,3,5-triazine, 2-amino-4-(m-(3'-methyl-1'-phenyl-5'-hydroxy-4'-pyrazolylazo)anilino)-6-isopropenyl-1,3,5-triazine, 2-amino-4-(N-methyl-p-(3'-methyl-1'-phenyl-5'-hydroxy-4'-pyrazolylazo)anilino)-6-isopropenyl-1,3,5-triazine, 2-amino-4-(p-phenylazoanilino)-6-isopropenyl-1,3,5-triazine and 4-phenylaso-7-(meth)acryloylamide-1-naphthol; anthraquinone type polymerizable dyestuffs such as 1,5-bis((meth)acryloylamino)-9,10-anthraquinone, 1-(4'-vinylbenzoylamide)-9,10-

anthraquinone, 4-amino-1-(4'-vinylbenzoylamide)-9,10-anthraquinone, 5-amino-1-(4'-vinylbenzoylamide)-9,10-anthraquinone, 8-amino-1-(4'-vinylbenzoylamide)-9,10-anthraquinone, 4-nitro-1-(4'-vinylbenzoylamide)-9,10-anthraquinone, 4-hydroxy-1-(4'-vinylbenzoylamide)-9,10-anthraquinone, 1-(3'-vinylbenzoylamide)-9,10-anthraquinone, 1-(2'-vinylbenzoylamide)-9,10-anthraquinone, 1-(4'-isopropenylbenzoylamide)-9,10-anthraquinone, 1-(3'-isopropenylbenzoylamide)-9,10-anthraquinone, 1-(2'-isopropenylbenzoylamide)-9,10-anthraquinone, 1,4-bis-(4'-vinylbenzoylamide)-9,10-anthraquinone, 1,4-bis-(4'-isopropenylbenzoylamide)-9,10-anthraquinone, 1,5-bis-(4'-vinylbenzoylamide)-9,10-anthraquinone, 1,5-bis-(4'-isopropenylbenzoylamide)-9,10-anthraquinone, 1-methylamino-4-(3'-vinylbenzoylamide)-9,10-anthraquinone, 1-methylamino-4-(4'-vinylbenzoyloxyethylamino)-9,10-anthraquinone, 1-amino-4-(3'-vinylphenylamino)-9,10-anthraquinone-2-sulfonic acid, 1-amino-4-(4'-vinylphenylamino)-9,10-anthraquinone-2-sulfonic acid, 1-amino-4-(2'-vinylbenzylamino)-9,10-anthraquinone-2-sulfonic acid, 1-amino-4-(3'-(meth)acryloylaminophenylamino)-9,10-anthraquinone-2-sulfonic acid, 1-amino-4-(3'-(meth)acryloylaminobenzylamino)-9,10-anthraquinone-2-sulfonic acid, 1-($\beta$-ethoxycarbonylallylamino)-9,10-anthraquinone, 1-($\beta$-carboxyallylamino)-9,10-anthraquinone, 1,5-di-($\beta$-carboxyallylamino)-9,10-anthraquinone, 1-($\beta$-isopropoxycarbonylallylamino)-5-benzoylamide-9,10-anthraquinone, 2-(3'-(meth)acryloylamide-anilino)-4-(3'-(3''-sulfo-4''-aminoanthraquinon-1''-yl)amino-anilino)-6-chloro-1,3,5-triazine, 2-(3'-(meth)acryloylamide-anilino)-4-(3'-(3''-sulfo-4''-aminoanthraquinon-1''-yl)amino-anilino)-6-hydrazino-1,3,5-triazine, 2,4-bis-((4''-methoxyanthraquinon-1''-yl)amino)-6-(3'-vinylanilino)-1,3,5-triazine and 2-(2'-vinylphenoxy)-4-(4'-(3''-sulfo-4''-aminoanthraquinon-1''-yl-amino)anilino)-6-chloro-1,3,5-triazine; nitro type polymerizable dyestuffs such as o-nitroanilinomethyl (meth)acrylate; and phthalocyanine type polymerizable dyestuffs such as (meth)acryloyl-modified tetramino copper phthalocyanine and (meth)acryloyl-modified (dodecanoyl-modified tetraamino copper phthalocyanine). These polymerizable dyestuffs may be used alone or in combination as a mixture of two or more different kinds.

Specific examples of the polymerizable ultraviolet absorbing dyestuff include, for example, benzophenone type polymerizable ultraviolet absorbing dyestuffs such as 2,4-dihydroxy-3-(p-styrenoazo)-benzophenone, 2,4-dihydroxy-5-(p-styrenoazo)benzophenone, 2,4-dihydroxy-3-(p-(meth)-acryloyloxymethylphenylazo)benzophenone, 2,4-dihydroxy-5-(p-(meth)acryloyloxymethylphenylazo)-benzophenone, 2,4-dihydroxy-3-(p-(meth)acryloyloxyethylphenylazo)benzophenone, 2,4-dihydroxy-5-(p-(meth)-acryloyloxyethylphenylazo)-benzophenone, 2,4-dihydroxy-3-(p-(meth)acryloyloxypropylphenylazo)-benzophenone, 2,4-dihydroxy-5-(p-(meth)acryloyloxypropylphenylazo)-benzophenone, 2,4-dihydroxy-3-(o-(meth)acryloyloxymethylphenylazo)benzophenone, 2,4-dihydroxy-5-(o-(meth)acryloyloxymethylphenylazo)-benzophenone, 2,4-dihydroxy-3-(o-(meth)acryloyloxyethylphenylazo)benzophenone, 2,4-dihydroxy-5-(o-(meth)acryloyloxyethylphenylazo)-benzophenone, 2,4-dihydroxy-3-(o-(meth)acryloyloxypropylphenylazo)-benzophenone, 2,4-dihydroxy-5-(o-(meth)acryloyloxypropylphenylazo)-bensophenone, 2,4-dihydroxy-3-(p-(N,N-di(meth)acryloyloxyethylamino)phenylazo)benzophenone, 2,4-dihydroxy-5-(p-(N,N-di(meth)-acryloyloxyethylamino)phenylazo)benzophenone, 2,4-dihydroxy-3-(o-(N,N-di(meth)acryloyloxyethylamino)-phenylazo)benzophenone, 2,4-dihydroxy-5-(o-(N,N-di(meth)acryloylethylamino)phenylazo)benzophenone, 2,4-dihydroxy-3-(p-(N-ethyl-N-(meth)acryloyloxyethylamino)phenylazo)benzophenone, 2,4-dihydroxy-5-(p-(N-ethyl-N-(meth)acryloyloxyethylamino)phenylazo)benzophenone, 2,4-dihydroxy-3-(o-(N-ethyl-N-(meth)-acryloyloxyethylamino)phenylazo)benzophenone, 2,4-dihydroxy-5-(o-(N-ethyl-N-(meth)-acryloyloxyethylamino)phenylazo)benzophenone, 2,4-dihydroxy-3-(p-(N-ethyl-N-(meth)acryloylamino)-phenylazo)benzophenone, 2,4-dihydroxy-5-(p-(N-ethyl-N-(meth)acryloylamino)phenylazo)benzophenone, 2,4-dihydroxy-3-(o-(N-ethyl-N-(meth)acryloylamino)phenylazo)benzophenone and 2,4-dihydroxy-5-(o-(N-ethyl-N-(meth)acryloylamino)phenylazo)benzophenone; and benzoic acid type polymerizable ultraviolet absorbing dyestuffs such as phenyl 2-hydroxy-4-(p-styrenoazo)benzoate. These polymerizable ultraviolet absorbing dyestuffs may be used alone or in combination as a mixture of two or more different kinds.

The amounts of the above-mentioned polymerizable ultraviolet absorber, polymerizable dyestuff and polymerizable ultraviolet absorbing dyestuff are substantially influenced by the thickness of the lens, and they are preferably not more than 3 parts by weight, more preferably from 0.1 to 2 parts by weight, per 100 parts by weight of the total amount of monomers to be subjected to polymerization. If the amount exceeds 3 parts by weight, the physical properties of the lens such as mechanical strength, tend to deteriorate. Further, in consideration of the toxicity of the ultraviolet absorber or dyestuff, such a material tends to be unsuitable as a material for ocular lenses such as contact lenses which are in direct contact with living tissues or intraocular lenses embedded in living bodies. Further, particularly in the case of a dyestuff, if the amount is too large, the color of the lens tends to be so deep that the transparency decreases, and visible rays tend to be hardly transmitted through the lens.

Further, in the present invention, one or more of said other copolymer components may be selected and made into a macromonomer, and such a macromonomer may be incorporated to the essential copolymer component of the polysiloxane macromonomer, as one of lens components other than the

monomer having an unsaturated double bond copolymerizable with the polysiloxane macromonomer.

The copolymerizable components including the polysiloxane macromonomer are suitably adjusted depending upon the particularly purpose of the desired ocular lens such as a contact lens or an intraocular lens and then subjected to copolymerization.

In the present invention, the polysiloxane macromonomer and said other copolymerizable component are adjusted to have the desired proportions within the above-mentioned range, and a radical polymerization initiator is added thereto, followed by polymerization by a usual method.

The usual method may be a method of gradually heating the mixture after the addition of the radical polymerization initiator at a temperature within a range of from room temperature to about 130 °C, or a method of irradiating electromagnetic waves such as microwaves, ultraviolet rays or radiation rays ($\gamma$-rays). In the case of the heat polymerisation, the temperature may stepwisely be raised. The polymerization may be conducted by a bulk polymerization method or a solution polymerization method using e.g. a solvent, or it may be conducted by any other method.

Specific examples of the radical polymerization initiator include, for example, azobisisobutylonitrile, azobisdimethylvaleronitrile, benzoyl peroxide, tert-butyl hydroperoxide and cumene hydroperoxide. These radical polymerization initiators may be used alone or in combination as a mixture of two or more different kinds. In a case where photopolymerization is employed, a photopolymerization initiator or sensitizer is preferably added. The above-mentioned polymerization initiator or sensitizer is incorporated usually in an amount of from about 0.001 to 2 parts by weight, preferably from 0.01 to 1 part by weight, per 100 parts by weight of the total amount of monomers to be polymerized.

For the shaping of ocular lenses such as contact lenses or intraocular lenses, shaping methods commonly used by those skilled in the art may be employed. As such shaping methods, there may be mentioned, for example, a lathe cutting and grinding method and a molding method. The cuttings and grinding method is a method in which the polymerization is conducted in a suitable mold or vessel to obtain a rod-, block- or plate-shaped base material (polymer), and then the base material is processed into a desired shape by mechanical processing such as cutting, grinding and polishing. The molding method is a method wherein a mold corresponding to the shape of a desired ocular lens is prepared, and the polymerization of the above-mentioned lens components is conducted in this mold to obtain a molded product, which may further be subjected to mechanical finishing treatment, if necessary.

When the ocular lens material of the present invention is obtained as a material which is soft at a temperature around room temperature, a cast molding method is generally suitable as the shaping method for shaping an ocular lens. As the cast molding method, a spin casting method or a static casting method is known.

Apart from these methods, it is possible to employ a method for the present invention in which a monomer capable of forming a hard polymer is impregnated in a soft material, and then such a monomer is polymerized to harden the entirety, which is then subjected to cutting and grinding processing, and from a product processed to a desired shape, the hard polymer is removed to obtain a shaped product composed of the soft material (Japanese Unexamined Patent Publications No. 2780241/1987 and No. 11854/1989).

Further, when an intraocular lens is to be obtained, a supporting portion of the lens may be prepared separately from the lens and then attached to the lens, or it may be molded simultaneously (integrally) with the lens.

Now, the ocular lens material of the present invention will be described in detail with reference to Examples. However, it should be understood that the present invention is by no means restricted to such specific Examples.

PREPARATION EXAMPLE 1

Preparation of macromonomer A

Into a 500 ml four-necked flask equipped with a stirrer, a thermometer, a condenser and a dropping funnel, 469 g (0.6 mol) of a polydimethylsiloxane having one hydroxyl group at each terminal represented by the formula:

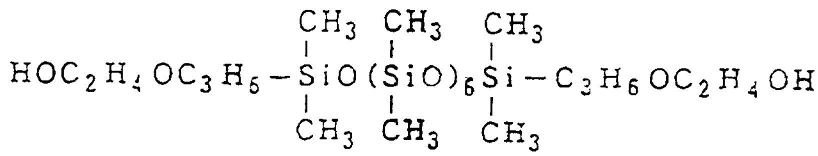

0.3 g of 2,6-di-t-butyl-p-cresol (BHT) and 0.06 g of dibutyltin dilaurate were charged, mixed and stirred. The mixture in the flask was heated to 50 °C, and 93 g (0.6 mol) of 2-methacryloyloxyethyl isocyanate was gradually dropwise added thereto over a period of about two hours by means of the dropping funnel while maintaining the temperature at a level of from 50 to 60 °C. Then, the stirring was continued at 60 °C for two hours. This reaction solution was sampled, and a predetermined amount of di-n-butylamine was added thereto and mixed. Then, the amount of the remaining isocyanate groups was measured by a potentiometric titration method employing hydrochloric acid, whereupon the conversion was determined and found to be 100%. Then, while this reaction solution was maintained at a temperature of from 50 to 60 °C, 101 g (0.2 mol) of tris(6-isocyanatehexyl)isocyanurate was dropwise added in about 30 minutes by means of a dropping funnel, and then stirring was continued at 60 °C for 4 hours. The amount of the remaining isocyanate groups was measured, whereupon the conversion was determined and found to be 100%. To this reaction solution, 20 g of ethanol was added, and the mixture was stirred at 60 °C for one hour. Then, low boiling point substances were removed under reduced pressure at 70 °C to obtain 659 g of a reaction product. The infrared absorption spectrum and the proton nuclear magnetic resonance spectrum of this reaction product were measured and analyzed, whereby the product was confirmed to be a urethane bond-containing polysiloxane macromonomer of the formula:

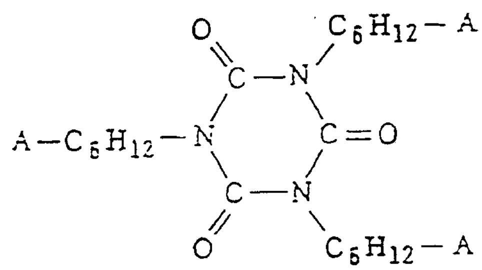

wherein A is:

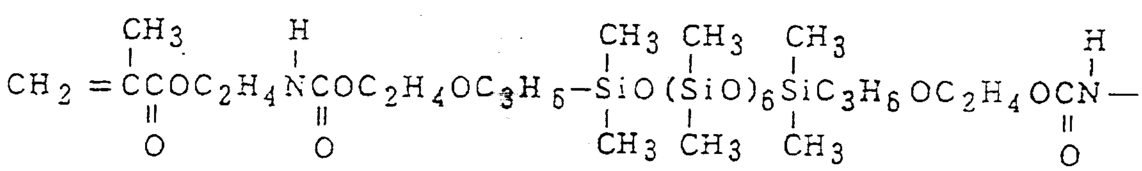

(hereinafter referred to as macromonomer A).

The general physical property values are shown below.

Viscosity (25 °C): 1,430 cSt

Specific gravity (25 °C): 1.010

Refractive index (25 °C): 1.4238

The viscosity was measured by a capillary method by means of a Cannon-Fenske viscometer (manufactured by Shibata Kagaku Kiki Kogyo K.K.); the specific gravity was measured by a hydrometer method; and the refractive index was measured by means of a-precision Abbe refractometer (3T Model, manufactured by Kabushiki Kaisha Atago). The same applies hereinafter.

PREPARATION EXAMPLE 2

Preparation of macromonomer B

Into a 500 ml four-necked flask equipped with a stirrer, a thermometer, a condenser and a dropping funnel, 457 g (0.3 mol) of a polydimethylsiloxane having one hydroxyl group at each terminal represented by the formula:

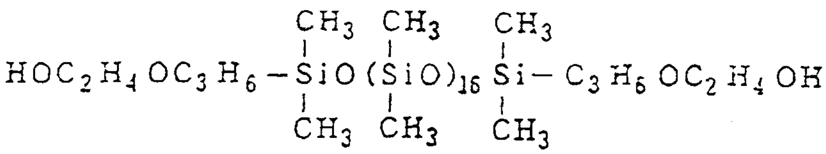

0.3 g of 2,6-di-t-butyl-p-cresol (BHT) and 0.06 g of dibutyltin dilaurate were charged, mixed and stirred. The mixture in the flask was heated to 50 ° C, and 47 g (0.3 mol) of 2-methacryloyloxyethyl isocyanate was gradually dropwise added thereto over a period of about two hours by means of the dropping funnel while maintaining the temperature at a level of from 50 to 60 ° C. Then, stirring was continued at 60 ° C for two hours. This reaction solution was sampled, and a predetermined amount of di-n-butylamine was added thereto and mixed. Then, the amount of the remaining isocyanate groups was measured by a potentiometric tit ration method employing hydrochloric acid, whereupon the conversion was determined and found to be 100%. Then, while this reaction solution was maintained at a temperature of from 50 to 60 ° C, 50 g (0.1 mol) of tris(6-isocyanatehexyl)isocyanurate was dropwise added thereto in about 30 minutes by means of the dropping funnel. Then, the mixture was stirred at 60 ° C for 4 hours. The amount of the remaining isocyanate groups was measured, whereupon the conversion was determined and found to be 100%. To this reaction solution, 20 g of ethanol was added, and the mixture was stirred at 60 ° C for one hour. Then, low boiling substances were removed under reduced pressure at 70 ° C to obtain 547 g of a reaction product. The infrared absorption spectrum and the proton nuclear magnetic resonance spectrum of this reaction product were measured and analyzed, whereby the product was confirmed to be a urethane bond-containing polysiloxane macromonomer of the formula:

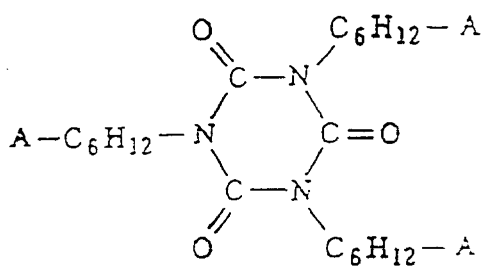

wherein A is:

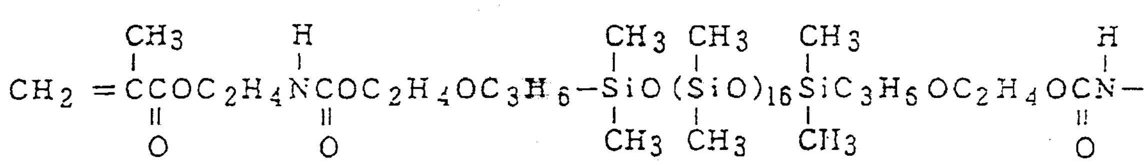

(hereinafter referred to as macromonomer B).

The general physical property values are shown below.

Viscosity (25 ° C): 4,280 cSt

Specific gravity (25 ° C): 1.055

Refractive index (25 ° C): 1.4478

EXAMPLE 1

20 parts by weight of macromonomer A, 80 parts by weight of trifluoroethyl methacrylate, 7 parts by weight of methyl methacrylate, 2 parts by weight of methacrylic acid, 2 parts by weight of ethylene glycol dimethacrylate and 0.2 part of 2,2'-azobis(2,4-dimethylvaleronitrile) (hereinafter referred to as V-65) as a polymerization initiator were uniformly mixed to obtain a transparent solution.

Then, the above copolymerizable components were put, together with an oxygen absorbent, into a glass test tube, then sealed and immersed in a circulation type constant-temperature bath and polymerized under heating at 35 °C for 40 hours and 50 °C for 8 hours. Further, in an air circulating drier, it was heated at 50 °C for 5 hours, and then the temperature was raised to 130 °C at a rate of 10 °C per hour, and the mixture was heated at 130 °C for two hours to complete the polymerization.

The obtained copolymer was not brittle and had good impact strength as a hard ocular lens material.

The obtained copolymer was subjected to cutting to prepare test specimens for measuring various physical properties. The physical properties of the test specimens were measured in accordance with the following methods. The results are shown in Table 1.

(a) Visual appearance

A test specimen in water was visually evaluated.

Evaluation standards

○ : Transparent
△ : Slightly turbid
X : Substantially turbid

(b) Oxygen permeability coefficient

The oxygen permeability coefficient was measured with respect to a test specimen having a diameter of 13 mm and a thickness of 0.5 mm by means of gas permeability measuring apparatus Model GTR-10, manufactured by Kabushiki Kaisha Yanagimoto Seisakusho. The unit is ml (STP)•$cm^2$/($cm^3$•sec•mmHg).

The oxygen permeability coefficients in Table 1 are numerical values obtained by multiplying the values of the oxygen permeability coefficients by $10^{11}$.

(c) Impact strength

A steel ball having a load of 6.75 g was dropped on a test specimen having a thinness of 0.5 mm in a constant temperature constant humidity chamber at 25 °C under a relative humidity of 50%, whereby the height (mm) when the test specimen broke was represented as the impact strength.

(d) Refractive index

The refractive index ($n_D^{25}$) of a test specimen having a thickness of 4 mm was measured at a temperature of 25 °C under a relative humidity of 50% by means of Abbe refractometer (l-T, tradename, manufactured by Kabushiki Kaisha Atago).

EXAMPLES 2 TO 4

Copolymers were prepared in the same manner as in Example 1 except that the copolymerizable components were changed as identified in Table 1, and their physical properties were measured. The results are shown in Table 1.

The obtained copolymers were not brittle and had good impact strength as hard ocular lens materials.

EXAMPLE 5

A copolymer was prepared in the same manner as in Example 1 except that macromonomer B was used instead of macromonomer A in Example 1, and its physical properties were measured. The results are shown in Table 1.

The obtained copolymer was not brittle and had good impact strength as a hard ocular lens material.

EXAMPLES 6 TO 8

Copolymers were prepared in the same manner as in Example 1 except that the copolymerizable components were changed as identified in Table 1, and their physical properties were measured. The results are shown in Table 1.

The obtained copolymers were not brittle and had good impact strength as hard ocular lens materials.

COMPARATIVE EXAMPLE 1

A copolymer was prepared in the same manner as in Example 1 except that 20 parts by weight of a linear macromonomer C having urethane bonds only at both terminals represented by the formula:

MA-U-$Si_8$-U-MA

wherein

MA is 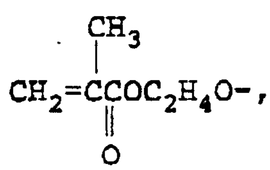

U is

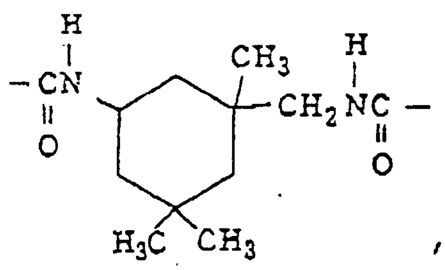

, and

$Si_8$ is 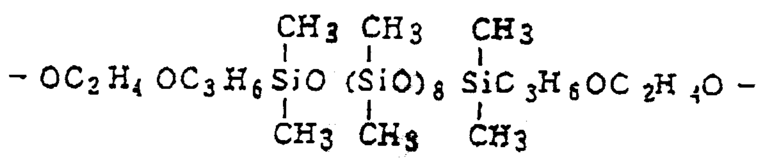

was used instead of macromonomer A in Example 1, and its physical properties were measured.

The obtained copolymer had low impact strength as compared with the copolymers obtained in Examples 1 and 5. With respect to the oxygen permeability coefficient, no significant difference from Example 1 was observed, but it was clearly small as compared with Example 5.

Table 1

| Example Nos. | Blend composition (parts by weight) | | | | | | | | Physical properties | | | |
|---|---|---|---|---|---|---|---|---|---|---|---|---|
| | Macro-monomer A | Macro-monomer B | Macro-monomer C | Tri-fluoro-ethyl meth-acrylate | Methyl meth-acrylate | Meth-acrylic acid | Ethylene glycol dimeth-acrylate | V-65 | Visual appear-ance | Impact strength (mm) | Oxygen permea-bility coeffi-cient | Refrac-tive index (-) |
| Example 1 | 20 | - | - | 80 | 7 | 2 | 2 | 0.2 | ○ | 54 | 14 | 1.434 |
| Example 2 | 40 | - | - | 60 | 7 | 2 | 2 | 0.2 | ○ | 48 | 36 | 1.444 |
| Example 3 | 60 | - | - | 40 | 7 | 2 | 2 | 0.2 | ○ | 68 | 62 | 1.452 |
| Example 4 | 80 | - | - | 20 | 7 | 2 | 2 | 0.2 | ○ | 69 | 57 | 1.458 |
| Example 5 | - | 20 | - | 80 | 7 | 2 | 2 | 0.2 | ○ | 77 | 38 | 1.427 |
| Example 6 | - | 40 | - | 60 | 7 | 2 | 2 | 0.2 | ○ | 91 | 104 | 1.431 |
| Example 7 | - | 60 | - | 40 | 7 | 2 | 2 | 0.2 | ○ | More than 91 | 233 | 1.433 |
| Example 8 | - | 80 | - | 20 | 7 | 2 | 2 | 0.2 | ○ | More than 91 | 362 | - |
| Compara-tive Example 1 | - | - | 20 | 80 | 7 | 2 | 2 | 0.2 | ○ | 33 | 14 | 1.433 |

EXAMPLE 9

50 parts by weight of hexafluoroisopropyl acrylate, 25 parts by weight of butyl acrylate, 15 parts by weight of macromonomer A, 10 parts by weight of macromonomer D of the formula:

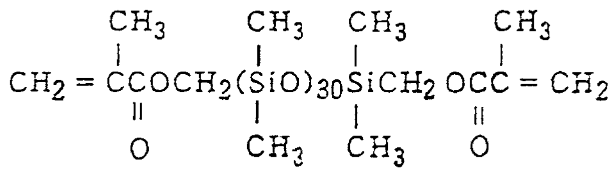

0.5 part of ethylene glycol dimethacrylate and 0.3 part of V-65 as a polymerization initiator were uniformly mixed to obtain a transparent solution. This solution was injected into a mold prepared by sandwiching a gasket made of a fluorine resin by polyester films from both sides and further sandwiching the assembly by glass plates from the outside thereof.

Then, the mold was transferred to an air circulating drier, and polymerization was conducted by heating it at 50°C for 18 hours and then raising the temperature to 110°C at a rate of 10°C per two hours, to obtain a copolymer of a film form.

The obtained copolymer was folded back and then released, whereupon it immediately returned to the initial state, thus indicating excellent resiliency. Thus, this copolymer was found to have flexibility suitable as a soft ocular lens material. Further, a test specimen in water was visually observed, whereby the visual appearance was transparent and faultless. Further, tackiness of the copolymer was found to be reduced.

Then, test specimens having a diameter of 14 mm were punched out of the copolymer film, and various physical properties were measured. The physical properties of the test specimens were measured in accordance with the following methods. The results are shown in Table 2.

(a) Visual appearance

A test specimen in water was visually observed.

Evaluation standards

- ○ : Transparent
- △ : Slightly turbid
- X : Substantially turbid

(b) Tackiness

The test specimen was touched with a finger, and the releasability of the finger from the test specimen was inspected.

Evaluation standards

- ○ : Finger readily released
- △ : Finger slightly hardly released
- X : Finger hardly released

(c) Oxygen permeability coefficient

The oxygen permeability coefficient was measured with respect to a specimen having a diameter of 13 mm and a thickness of 0.5 mm by means of a gas permeability measuring apparatus Model GTR-10, manufactured by Kabushiki Kaisha Yanagimoto Seisakusho. The unit is ml (STP)•$cm^2/cm^3$•sec•mmHg.

The oxygen permeability coefficients in Table 2 are numerical values obtained by multiplying the values of the oxygen permeability coefficients by $10^{11}$.

(d) Strength against penetration

By means of an Instron type compression tester, a pressing needle having a diameter of 1/16 inch was pressed against the center of a test specimen, and the load (g) at the time of the breakage of the test specimen, was measured. However, the values listed in the Table are values calculated as the thickness of

the test specimen is 0.2 mm.

EXAMPLE 10

A copolymer of a film form was prepared in the same manner as in Example 9 except that macromonomer A was changed to macromonomer B.

Then, test specimens were prepared in the same manner as in Example 9 from the obtained copolymer of a film form, and various physical properties were measured. The physical properties of the test specimens were measured in accordance with the same methods as in Example 9. The results are shown in Table 2.

The obtained copolymer was folded back and then released, whereupon it immediately returned to the initial state, thus indicating excellent resiliency. Thus, this copolymer was found to have flexibility suitable as a soft contact lens material. Further, a test specimen in water was visually observed, whereby the visual appearance was transparent and faultless. Further, tackiness of the copolymer was found to be reduced.

EXAMPLE 11

30 parts by weight of hexafluoroisopropyl acrylate, 10 parts by weight of butyl acrylate, 60 parts by weight of macromonomer B, 0.5 part of ethylene glycol dimethacrylate and 0.3 part of V-65 as a polymerisation initiator were uniformly mixed to obtain a transparent solution. From this solution, a copolymer of a film form was prepared in the same manner as in Example 9.

Then, from the obtained copolymer of a film form, test specimens were prepare in the same manner as in Example 9, and various physical properties were measured. The physical properties of the test specimens were measured in accordance with the same methods as in Example 9. The results are shown in Table 2.

The obtained copolymer was folded back and then released, whereupon it immediately returned to the initial state, thus indicating excellent resiliency. Thus, this copolymer was found to have flexibility suitable as a soft ocular lens material. Further, a test specimen in water was visually observed, whereby the visual appearance was transparent and faultless. Further, tackiness of the copolymer was found to be reduced.

EXAMPLE 12

10 parts by weight of hexafluoroisopropyl acrylate, 10 parts by weight of butyl acrylate, 80 parts by weight of macromonomer B, 0.5 part of ethylene glycol dimethacrylate and 0.3 part of V-65 as a polymerization initiator were uniformly mixed to obtain a transparent solution. From this solution, a copolymer of a film form was prepared in the same manner as in Example 9.

Then, from the obtained copolymer of a film form, test specimens were prepared in the same manner as in Example 9, and various physical properties were measured. The physical properties of the test specimens were measured in accordance with the same methods as in Example 9. The results are shown in Table 2.

The obtained copolymer was folded back and then released, whereupon it immediately returned to the initial state, thus indicating excellent resiliency. Thus, this copolymer was found to have flexibility suitable as a soft ocular lens material. Further, a test specimen in water was visually observed, whereby the visual appearance was transparent and faultless. Further, tackiness of the copolymer was found to be reduced.

Table 2

| Example Nos. | Blend composition (parts by weight) | | | | | | | Physical properties | | | |
|---|---|---|---|---|---|---|---|---|---|---|---|
| | Hexafluoroisopropyl acrylate | Butyl acrylate | Macromonomer A | Macromonomer B | Macromonomer D | Ethylene glycol dimethacrylate | V-65 | Visual appearance | Tackiness | Oxygen permeability coefficient | Strength against penetration (g) |
| Example 9 | 50 | 25 | 15 | - | 10 | 0.5 | 0.3 | ○ | ○ | 240 | 426 |
| Example 10 | 50 | 25 | - | 15 | 10 | 0.5 | 0.3 | ○ | ○ | 330 | 166 |
| Example 11 | 30 | 10 | - | 60 | - | 0.5 | 0.3 | ○ | ○ | 381 | 292 |
| Example 12 | 10 | 10 | - | 80 | - | 0.5 | 0.3 | ○ | ○ | 499 | 377 |

As is apparent from the foregoing results, ocular lens materials of Examples 1 to 12 were those obtained by using novel urethane bond-containing silicone macromonomers. As distinguished from conventional macromonomers, such macromonomers not only have urethane bonds at their terminals but also have urethane bonds introduced in the segments. Further, their molecules have a three dimensionally radially extended shape, whereby the number of urethane bonds per molecule is large. Further, in spite of the fact

that the number of urethane bonds is large, and the molecular shape is rather complicated, the viscosity is relatively low as compared with conventional urethane bond-containing silicone macromonomers. Accordingly, when compared with the same molecular weight, the number of urethane bonds is larger than in conventional silicone macromonomers. Therefore, with the same molecular weight and with the same amount of incorporation, mechanical strength will be further imparted to the material without impairing the oxygen permeability.

EXAMPLES 13 TO 24

The copolymerizable components as identified in Table 3 were uniformly mixed to obtain a transparent solution.

Then, the copolymerizable components were put, together with an oxygen absorbent, into a glass test tube, then sealed and immersed in a circulation system constant-temperature bath and polymerized under heating at 35 °C for 40 hours and at 50 °C for 8 hours. Further, in an air circulating drier, the temperature was raised from 60 °C to 110 °C at a rate of 10 °C per two hours. Then, the mixture was heated at 120 °C for one hour and then at 110 °C for two hours to complete the polymerization.

The obtained copolymers were not brittle and had mechanical strength suitable as a water-absorptive soft ocular lens material.

The obtained copolymers were subjected to cutting to obtain test specimens for measuring various physical properties. The physical properties of the test specimens were measured in accordance with the following methods. The results are shown in Table 3.

(a) Transparency

The test specimen in water was visually evaluated.

Evaluation standards

O : Transparent
△ : Slightly turbid
X : Substantially turbid

(b) Flexibility

A test specimen was pulled from both sides, and the stretchability was examined.

Evaluation standards

O : Very well stretched
△ : Not stretched very well
X : Not substantially stretched

(c) Tackiness (lipid stain resistance)

The test specimen was touched with a finger, and the releasability from the test specimen was examined.

Evaluation standards

O : Finger readily released
△ : Finger slightly hardly released
X : Finger hardly released

(d) Penetration strength

By means of a penetration strength tester, a pressing needle having a diameter of 1/16 inch was pressed against the center of a test specimen, and the load (g) at the time of the breakage of the test specimen was measured. However, the values listed in Table 3 are values calculated as the thickness of the

test specimen was 0.2 mm.

(e) Elongation

The elongation (%) at the time of the breakage of the test specimen in the above-mentioned measurement of the penetration strength, was measured.

(f) Oxygen permeability coefficient

The oxygen permeability coefficient of a test specimen was measured in a physiological saline at 35 °C by means of Seikaken Type film oxygen permeability measuring instrument manufactured by Rika Seiki Kogyo Kabushiki Kaisha. The unit for oxygen permeability coefficient is ml (STP)•$cm^2$/($cm^3$•sec•mmHg). The oxygen permeability coefficients in Table 3 are numerical values obtained by multiplying the values of the oxygen permeability coefficients with the thickness of the test specimens being 0.2 mm by $10^{11}$.

(g) Water content

A test specimen was subjected to hydration treatment, and then the water content (%) of the test specimen was measured in accordance with the following equation:

$$\text{Water content (\%)} = \frac{W-Wo}{W} \times 100$$

where W is the weight (g) of the test specimen upon absorption of water to the equibrium state after the hydration treatment, and Wo is the weight (g) of the above-mentioned test specimen which dried to the equibrium state in a drier after the hydration treatment.

(h) Refractive index

The refractive index (no unit) was measured at a temperature of 25 °C under a relative humidity of 50% by means of Atago refractometer IT, manufactured by Kabushiki Kaisha Atago.

Table 3

| Example Nos. | | 13 | 14 | 15 | 16 | 17 | 18 | 19 | 20 | 21 | 22 | 23 | 24 |
|---|---|---|---|---|---|---|---|---|---|---|---|---|---|
| Blend composition (parts by weight) | Macromonomer A | 10 | 20 | 10 | 20 | 10 | 20 | - | - | - | - | - | - |
| | Macromonomer B | - | - | - | - | - | - | 10 | 20 | 10 | 20 | 10 | 20 |
| | DMAA | 30 | 30 | 40 | 40 | 50 | 50 | 30 | 30 | 40 | 40 | 50 | 50 |
| | SiMA | 60 | 50 | 50 | 40 | 40 | 30 | 60 | 50 | 50 | 40 | 40 | 30 |
| | EDMA | 0.5 | 0.5 | 0.5 | 0.5 | 0.5 | 0.5 | 0.5 | 0.5 | 0.5 | 0.5 | 0.5 | 0.5 |
| | -65 | 0.1 | 0.1 | 0.1 | 0.1 | 0.1 | 0.1 | 0.1 | 0.1 | 0.1 | 0.1 | 0.1 | 0.1 |
| Physical properties | Transparency | ○ | ○ | ○ | ○ | ○ | ○ | ○ | ○ | ○ | ○ | ○ | ○ |
| | Flexibility | ○ | ○ | ○ | ○ | ○ | ○ | ○ | ○ | ○ | ○ | ○ | ○ |
| | Tackiness | ○ | ○ | ○ | ○ | ○ | ○ | ○ | ○ | ○ | ○ | ○ | ○ |
| | Penetration strength (g) | 249 | 259 | 260 | 176 | 252 | 244 | 411 | 309 | 246 | 195 | 157 | 204 |
| | Elongation (%) | 99 | 48 | 71 | 51 | 48 | 44 | 118 | 81 | 97 | 58 | 66 | 61 |
| | Oxygen permeability coefficient | 39 | 75 | 81 | 56 | 80 | 74 | 52 | 48 | 77 | 96 | 82 | 80 |
| | Water content (%) | 16 | 17 | 30 | 29 | 41 | 39 | 16 | 17 | 31 | 30 | 43 | 43 |
| | Refractive index (-) | 1.44 | 1.45 | 1.44 | 1.42 | 1.44 | 1.43 | 1.45 | 1.44 | 1.43 | 1.43 | 1.42 | 1.42 |

The abbreviations used in Table 3 have the following meanings:
DMAA: N,N-dimethylacrylamide
SiMA: Tris(trimethylsiloxy)silylpropyl methacrylate
ETMA: Ethylene glycol dimethacrylate
It is evident from the results shown in Table 3 that the ocular lens materials of Examples 13 to 24 show

water content and have high oxygen permeability and high mechanical strength.

The ocular lens material of the present invention provides the following effects.

(a) The ocular lens material of the present invention is excellent in the oxygen permeability, and when it is formed into a contact lens, it provides an effect that it is free from impairing the metabolic function of cornea.

(b) The ocular lens material of the present invention is excellent in the mechanical strength, and it provides an effect that in the form of a lens, the shape is stable, and the lens is free from breakage against various physical treatments.

(c) Further, the ocular lens material of the present invention provides an effect such that when formed into a soft lens such as a soft contact lens, it gives a comfortable feeling to the wearer, and when formed into a soft intraocular lens, it can readily be inserted in a deformed shape through a small incision without damaging the ocular tissues.

(d) Further, the ocular lens material of the present invention has an effect that when formed into a hard lens such as a hard contact lens, it is excellent in the impact strength, since it is excellent in the mechanical strength as mentioned above.

## Claims

**1.** An ocular lens material made of a copolymer of a polysiloxane macromonomer of the formula (I):

$$A^1-U^1-S^1-I^1-T^1 \begin{array}{l} / \, I^2-S^2-U^2-A^2 \\ \\ \backslash \, I^3-S^3-U^3-A^3 \end{array} \qquad (I)$$

wherein $A^1$ is a group of the formula (II):

$Y^{11}-R^{12}-$ (II)

wherein $Y^{11}$ is an acryloyloxy group, a methacryloyloxy group, a vinyl group or an allyl group, and $R^{12}$ is a $C_{2-6}$ linear or branched alkylene group;

each of $A^2$ and $A^3$ independently represents a group of the formula (III):

$-R^{22}-Y^{21}$ (III)

wherein $Y^{21}$ is an acryloyloxy group, a methacryloyloxy group, a vinyl group or an allyl group, and $R^{22}$ is a $C_{2-6}$ linear or branched alkylene group;

$U_1$ is a group of the formula (IV):

$-X^{31}-E^{32}-X^{33}-R^{34}-$ (IV)

wherein $X^{31}$ is a covalent bond, an oxygen atom or a $C_{2-20}$ alkylene glycol group; $E^{32}$ is a -NHCO- group (provided that in this case, $X^{31}$ is a covalent bond, and $E^{32}$ forms a urethane bond together with $X^{33}$) or a bivalent group derived from a diisocyanate selected from the group consisting of saturated aliphatic, alicyclic or aromatic diisocyanates (provided that in this case, $X^{31}$ is an oxygen atom or a $C_{2-20}$ alkylene glycol group, and $E^{32}$ forms a urethane bond together with $X^{31}$ and $X^{33}$); $X^{33}$ is an oxygen atom or a $C_{2-20}$ alkylene glycol group; and $R^{34}$ is a $C_{1-6}$ linear or branched alkylene group;

each of $U^2$ and $U^3$ independently represents a group of the formula (V):

$-R^{41}-X^{42}-E^{43}-X^{44}-$ (V)

wherein $X^{44}$ is a covalent bond, an oxygen atom or a $C_{2-20}$ alkylene glycol group; $E^{43}$ is a -CONH- group (provided that in this case, $X^{44}$ is a covalent bond, and $E^{43}$ forms a urethane bond together with $X^{42}$) or a bivalent group derived from a diisocyanate selected from the group consisting of saturated aliphatic, alicyclic and aromatic diisocyanates (provided that in this case, $X^{44}$ is an oxygen atom or a

$C_{2-20}$ alkylene glycol group, and $E^{43}$ forms a urethane bond together with $X^{44}$ and $X^{42}$); $X^{42}$ is an oxygen atom or a $C_{2-20}$ alkylene glycol group; and $R^{41}$ is a $C_{1-6}$ linear or branched alkylene group;

each of $S^1$, $S^2$ and $S^3$ independently represents a group of the formula (VI):

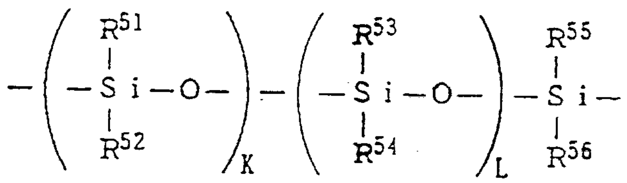

(VI)

wherein each of $R^{51}$, $R^{52}$, $R^{53}$, $R^{54}$, $R^{55}$ and $R^{56}$ independently represents a $C_{1-3}$ alkyl group or a phenyl group, K is an integer of from 1 to 1,500, and L is an integer of from 0 to (1,500 - K);

$I^1$ is a group of the formula (VII):

$-R^{61}-X^{62}-$ (VII)

wherein $X^{62}$ is a covalent bond, an oxygen atom or a $C_{2-20}$ alkylene glycol group, and $R^{61}$ is a $C_{1-6}$ linear or branched alkylene group;

each of $I^2$ and $I^3$ independently represents a group of the formula (VIII):

$-X^{71}-R^{72}-$ (VIII)

wherein $X^{71}$ is a covalent bond, an oxygen atom or a $C_{2-20}$ alkylene glycol group, and $R^{72}$ is a $C_{1-6}$ linear or branched alkylene group; and

$T^1$ is a group of the formula (IX):

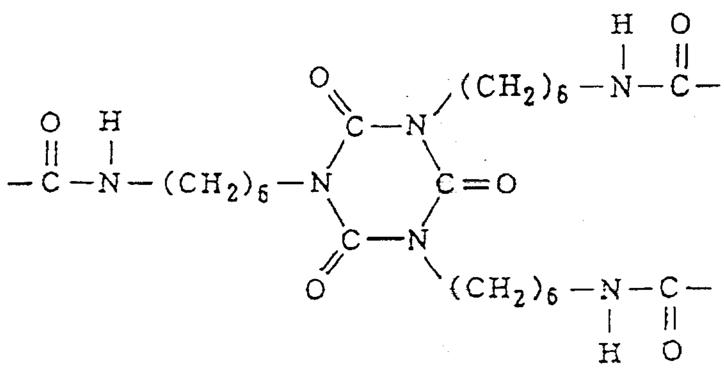

(IX)

with a monomer having an unsaturated double bond copolymerizable with the polysiloxane macromonomer.

**2.** The ocular lens material according to Claim 1, wherein each of $Y^{11}$ and $Y^{21}$ is an acryloyloxy group, a methacryloyl group or a vinyl group.

**3.** The ocular lens material according to Claim 1, wherein each of $R^{12}$ and $R^{22}$ is an ethylene group, a propylene group or a butylene group.

**4.** The ocular lens material according to Claim 1, wherein the bivalent group derived from a diisocyanate for each of $E^{32}$ and $E^{43}$ is a bivalent group derived from hexamethylene diisocyanate, tolylene diisocyanate or isophorone diisocyanate.

**5.** The ocular lens material according to Claim 1, wherein the $C_{2-20}$ alkylene glycol for each of $X^{31}$, $X^{33}$, $X^{42}$, $X^{44}$, $X^{62}$ and $X^{71}$ is a group of the formula (X):

$-O-(C_x-H_{2x}-O)_y-$ (X)

wherein x is an integer of from 2 to 4, and y is an integer of from 1 to 5.

6. The ocular lens material according to Claim 1, wherein in the formula (VI), K is an integer of from 1 to 100, L is an integer of from 0 to 100, and K + L is from 2 to 200.

7. The ocular lens material according to Claim 1, wherein the polysiloxane macromonomer of the formula (I) is in an amount of from 3 to 80 parts by weight per 100 parts by weight of the total amount of the comonomers.

8. The ocular lens material according to Claim 1, wherein the monomer having an unsaturated double bond copolymerizable with the polysiloxane macromonomer, is one or more members selected from the group consisting of alkyl (meth)acrylates, alkoxyalkyl (meth)acrylates, alkylthioalkyl (meth)acrylates, styrene, α-methylstyrene, alkylstyrenes, and alkyl-α-methylstyrenes, in an amount of from 3 to 60 parts by weight per 100 parts by weight of the total amount of the comonomers.

9. The ocular lens material according to Claim 1, wherein the monomer having an unsaturated double bond copolymerizable with the polysiloxane macromonomer, is at least one member selected from the group consisting of organopolysiloxane-containing alkyl (meth)acrylates, alkylvinylsilanes, and organopolysiloxane-containing styrene derivatives of the formula (XI):

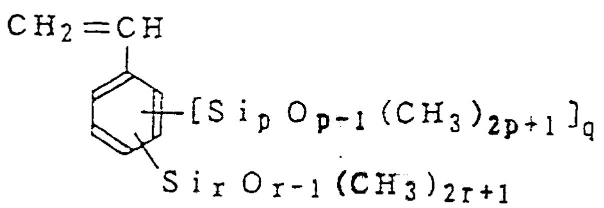

(XI)

wherein p is an integer of from 1 to 15, q is 0 or 1, and r is an integer of from 1 to 15, in an amount of from 2 to 80 parts by weight per 100 parts by weight of the total amount of the comonomers.

10. The ocular lens material according to Claim 1, wherein the monomer having an unsaturated double bond copolymerizable with the polysiloxane macromonomer, is at least one member selected from the group consisting of hydroxyalkyl (meth)acrylates, (alkyl)aminoalkyl (meth)acrylates, alkyl(meth)-acrylamides, polyglycol mono (meth)acrylates, vinylpyrrolidone, (meth)acrylic acid, maleic anhydride, fumaric acid derivatives, amino styrene and hydroxystyrene, in an amount of from 5 to 70 parts by weight per 100 parts by weight of the total amount of the comonomers.

11. The ocular lens material according to Claim 1, wherein the monomer having an unsaturated double bond copolymerizable with the polysiloxane macromonomer, is a fluorine-containing monomer of the formula (XII):

$CH_2 = CR^7COOC_sH_{(2s-t-u+1)}F_t(OH)_u$ (XII)

wherein $R^7$ is a hydrogen atom or $CH_3$, s is an integer of from 1 to 15, t is an integer of from 1 to (2s + 1) and u is an integer of from 0 to 2, in an amount of from 5 to 80 parts by weight per 100 parts by weight of the total amount of the comonomers.

12. The ocular lens material according to Claim 1, wherein the monomer having in unsaturated double bond copolymerizable with the polysiloxane macromonomer, is a crosslinking agent in an amount of from 0.01 to 10 parts by weight per 100 parts by weight of the total amount of the comonomers.

13. The ocular lens material according to Claim 1, wherein the monomer having an unsaturated double bond copolymerizable with the polysiloxane macromonomer, is a polymerizable ultraviolet absorber, a polymerizable dyestuff or a polymerizable ultraviolet absorbing dyestuff in an amount of not more than

3 parts by weight per 100 parts by weight of the total amount of the comonomers.